# EUROPÄISCHE PATENTSCHRIFT

(11) **EP 1 126 941 B1**
(45) Veröffentlichungstag und Bekanntmachung des Hinweises auf die Patenterteilung: **24.07.2002**
(21) Anmeldenummer: 99960829.2
(22) Anmeldetag: 28.10.1999
(51) Int. Cl.: B23B 31/26, B23B 31/28

(54) **SPANNEINRICHTUNG EINER MACHINENSPINDEL**
CLAMP MECHANISM FOR A MACHINE SPINDLE
DISPOSITIF DE SERRAGE D'UNE BROCHE DE MACHINE

(30) Priorität: 02.11.1998 DE 19850569
(43) Veröffentlichungstag der Anmeldung: 29.08.2001
(73) Patentinhaber: Schröder, Reinhard, 33729 Bielefeld (DE)
(72) Erfinder: Schröder, Reinhard, 33729 Bielefeld (DE)
(74) Vertreter: Rolf, Gudrun
(86) Internationale Anmeldenummer: DE9903433
(87) Internationale Veröffentlichungsnummer: WO0025966

(56) Entgegenhaltungen:
- EP-A- 0 228 007
- EP-A- 0 234 230
- DE-A- 3 218 083
- DE-A- 3 709 246

## Beschreibung

Die Erfindung betrifft eine Maschinenspindel gemäß dem Oberbegriff des Anspruchs 1 (siehe EP-A-0 234 230).

Die Funktion Spannen/ Lösen wird an bekannten Arbeitsspindeln entweder manuell oder durch hydraulisch bzw. pneumatisch betätigte Spanneinrichtungen realisiert, wobei das Druckmedium über Drehverteiler von nicht rotierenden Bauteilen auf die rotierenden Teile übertragen werden muß. Drehverteiler sind dabei wegen entstehender Leckageverluste, Wärmeentwicklung und hierdurch bedingter Begrenzung hinsichtlich Drehzahl und übertragbarem Druck problematische Komponenten in einer Maschine. Zur Werkzeugspannung werden daher vielfach Tellerfederpakete innerhalb der rotierenden Spindel verwendet, die dann für den jeweiligen Anwendungsfall immer exakt ausgelegt werden müssen, weil kurze realisierbare Spannwege und die Berücksichtigung großer Lösekräfte keine flexiblen Lösungen zulassen. Zum Festsetzen der Maschinenspindel in einer bestimmten Winkelposition wird eine weitere hydraulisch oder pneumatisch betätigte Einrichtung an den Arbeitsspindeln benötigt.

In der Offenlegungsschrift DE 43 25 593 A1 wird eine Maschinenspindel beschrieben, die auf Grund besonders ausgeführter Elemente Spann- Lösefunktionen durch den Spindelantrieb selbst ausführen konn. Das Funktionsprinzip führt aber zu einer nachteiligen Rotation der Spannaufnahme beim Spann- Lösevorgang.

Weiterhin ist eine Einrichtung zur Betätigung der Spannbacken eines Kraftspannfutters mit geteilten Spindelwellenteilen bekannt ( EP-A-0 234 230), bei der jedoch nur ein erstes Spindelwellenteil in einem Gehäuse einer Werkzeugmaschine und das andere Spindelwellenteil innerhalb des ersten Spindelwellenteils mehrfach gelagert ist, so dass sich ein wenig kompakter Aufbau der Einrichtung ergibt.

Der Erfindung liegt die Aufgabe zugrunde eine Arbeitsspindel von Bearbeitungsmaschinen und Robotern zur Verfügung zu stellen, in der Funktionen wie Rotation, Positionieren und Festsetzen in bestimmter Winkellage, Spannen und Lösen sowie das Greifen von Werkzeugen oder Werkstücken auch bei größerem Lagerabstand zu einer möglichst kompakten Einheit mit möglichst wenig Funktionselementen zusammengefasst sind.

Die Lösung dieser Aufgabe wird in Verbindung mit den Oberbegriffsmerkmalen erfindungsgemäß durch die im kennzeichnenden Teil des Hauptanspruches angegebenen technischen Merkmale vermittelt. Die erfinderische Maschinenspindel zur Werkzeug- oder Werkstückaufnahme mit zweigeteilter zentraler Spindelwelle, die mit ihren beiden gegeneinander verdrehbaren, aber axial zueinander unverschieblichen Spindelwellenteilen als eine Einheit an beiden Spindelenden in einem rotationsfesten Spindelgehäuse gelagert ist, wobei die beiden Spindelwellenteile der Spindelwelle koaxial angeordnet sind, die als Einheit stabil gelagert ist, und durch eine relative Verdrehung des ersten Spindelwellenteils gegen das zweite Sapindelwellenteil ein integrierter aufgabenabhangiger Spann- Lösemechanismus betätigt werden kann, wobei der Maschinenspindel wenigstens ein winkellagegeregelter Spindelantrieb zugeordnet ist und das zweite Spindelwellenteil ohne Werkzeug- oder Werkstückaufnahme mit dem Spindelantrieb verbunden ist und wobei das erste Spindelwellenteil, das eine der Werkzeug- oder Werkstückaufnahme aufweist, in zwei Lagerstellen ordentlich im rotationsfesten Spindelgehäuse und das zweite Spindelwellenteil seinerseits indirekt und koaxial angeordnet auf oder im ersten Spindelwellenteil gelagert ist.

Die Einheit der Spindelwelle ist dadurch als Ganzes stabil gelagert, indem das erste Spindelwellenteil mit der Werkzeug- oder Werkstückaufnahme nur auf der Seite mit der Werkzeug- oder Werkstückaufnahme in einer ersten Lagerstelle direkt im Spindelgehäuse und mit dem anderen Teilwellenende indirekt im zweiten Spindelwellenteil gelagert ist, wobei letzteres seinerseits nur mit der zweiten Lagerstelle direkt im Spindelgehäuse gelagert ist und dabei durch das stabil gelagerte erste Spindelwellenteil gestützt wird, indem dieses innerhalb des zweiten Spindelwellenteils bis in die zweite Lagerstelle hineinreicht oder aber sehr nahe bis an diese heran.

Weitere vorteilhafte Ausgestaltungen der Erfindung ergeben sich aus und in Kombination mit den weiteren Unteransprüchen.

Beim Spannen und Lösen über den Spindelantrieb wird die erforderliche Gegenhaltefunktion je nach Ausführung entweder als Indexierung bzw. Klemmung der Spindel wirksam, oder sie wirkt in Form eines zweiten geregelten Antriebs, indem ein Spann- Lösevorgang bei jeder gewünschten Drehzahl für die Werkzeug- oder Werkstückaufnahme möglich wird (incl. Drehzahl 0). Hierzu wird die zentrale Spindelwelle zweigeteilt ausgeführt, so daß ' durch relatives Verdrehen der beiden Spindelwellenteile zueinander ein von Fall zu Fall unterschiedlicher Spann- Lösemechanismus betätigt wird.

Gemäß einer bevorzugten Ausführungsform der Erfindung wird die zweiteilige Spindelwelle koaxial von einem zwischen zwei Endstellungen axial verschieblichen Ring umfaßt, der in seiner einen axialen Endstellung die beiden Spindelwellenteile zu einer als Einheit wirksamen Spindelwelle für den normalen Betrieb als Maschinenspindel verbindet und in seiner anderen axialen Endstellung den ersten Spindelwellenteil mit der Werkzeug- oder Werkstückaufnahme fest mit dem nicht rotierenden Spindelgehäuse verbindet, wobei der nicht festgesetzte zweite Spindelwellenteil ausschließlich mit dem je nach Aufgabenstellung verwendeten Spann- Lösemechanismus gekoppelt ist, der über einen mit diesem Spindelwellenteil verbundenen geregelte Spindelantrieb den Spannmechanismus gezielt betätigen kann.

Bei einer weiteren vorteilhaften Ausgestaltung der Erfindung ist der erste Spindelwellenteil mit der Werkzeug- oder Werkstückaufnahme von der zweiteiligen Spindelwelle mit einem eigenen winkellagegeregelten Spindelantrieb verbunden, mit dem der erste Spindelwellenteil separat antreibbar ist, wobei die separaten Ansteuerungen für die beiden Spindelwellenteile über eine Achseninterpolation gekoppelt sind.

Die beiden Spindelwellenteile sind innerhalb der Spindelwelleneinheit axial ortsfest gegeneinander verdrehbar angeordnet, so daß Reaktionskräfte beim Spann- Lösevorgang durch die axiale Verbindung aufgenommen werden können.

Die Spann- Lösebewegung wird vorteilhafterweise entweder am Spindelwellenende auf ein durch die gesamte Spindelwelle geführtes Betätigungselement für den Spann- Lösemechanismus übertragen, indem das Betätigungselement mit dem topfförmigen Spindelwellenteil verbunden ist oder das Betätigungselement mit dem Spindelwellenteil einteilig ausgebildet ist oder die Spann- Lösebewegung wird gemäß einer anderen bevorzugten Ausführungsform über eine Spindeldurchdringung im ersten Spindelwellenteil auf ein im Spindelwelleninneren geführtes Betätigungselement übertragen, indem das zweite Spindelwellenteil entweder teilweise selbst als Spannmutter wirkt und ausgebildet ist, oder eine separate Spannmutter, die ebenfalls koaxial und axial unverschieblich auf dem ersten Spindelwellenteil angeordnet ist, die relative Verdrehung von zweiten Spindelwellenteil aufnimmt, wobei das als Spannmutter ausgebildete zweite Spindelwellenteil oder die separate Spannmutter mit axial verschieblichen Segmenten in Längsnuten am Spindelwellenteil so verbunden ist, daß ihre relative Verdrehung zu einer Axialbewegung der Spannsegmente und des mit diesen gekoppelten Betätigungselements führt.

Der gesamte Spann- Löseweg ist funktionell aufgeteilt in eine erste Teilstrecke, auf der spezifische Spannelemente wie Spanneinsätze und Greifer als Ganzes lös- oder fixierbar sind und in eine restliche Teilstrecke, auf der diese spezifischen Spannelemente betätigt werden.

Der koaxial angeordnete und axial verschiebliche Ring verbindet in einer seiner axialen Endstellungen die beiden Spindelwellenteile formschlüssig, was deren Verdrehlageposition zueinander und den daraus resultierenden Spann- Lösestatus sichert. Dieser Ring weist eine Innenverzahnung auf, die in der einen axialen Endstellung mit einer passenden Außenverzahnung auf beiden Spindelwellenteilen gleichzeitig im Eingriff ist und in der anderen axialen Endstellung nur mit einer Außenverzahnung eines Spindelwellenteils im Eingriff ist.

Der koaxial angeordnete Ring ist in sich radial koaxial zweigeteilt, wobei das äußere Ringteil axial verschieblich aber unverdrehbar zum Spindelgehäuse ausgebildet ist und das innere Ringteil verdrehbar aber axial unverschieblich mit dem äußeren Ringteil verbunden ist. Der äußere, nicht drehbare Ringteil ist bevorzugterweise als Ringkolben ausgebildet ist und bildet mit dem Spindelgehäuse eine Druckkammer, die mit einem Druckmedium beaufschlagbar ist. Der äußere Ringteil stellt die spielfreie Verbindung zwischen dem nicht rotierenden Spindelgehäuse und dem Spindelwellenteil mit der Werkzeug- oder Werkstückaufnahme in einer seiner axialen Endstellung her. Im Spindelgehäuse ist ein Positionsgeber angeordnet, der die jeweiligen Drehwinkelpositionen beider Spindelwellenteile erfaßt. Weiterhin kann damit die Beibehaltung von einem bestimmten Spann- Lösestatus überwacht werden, so daß bei hohen eingebrachten Spann- Lösemomenten der Spindelantrieb am zweiten Spindelwellenteil ' den Spindelantrieb am ersten Spindelwellenteil mit ausreichendem Abstand zum Spann- Lösemoment als Parallelantrieb unterstützen kann.

Dadurch, daß der Spann- Lösemechanismus selbsthemmend ausgebildet ist, ist ein ständiges aktives Gegenhalten des Spindelantriebs am Spindelwellenteil zur Aufrechterhaltung der Spannkraft nicht erforderlich.

Nachfolgend sind drei Ausführungsvarianten der Erfindung anhand von Zeichnungen näher erläutert. Es zeigen:
- Fig. 1: eine Arbeitsspindel zur Verwendung als feste und als rotierende Werkzeugaufnahme mit Spannkrafteinleitung übers Spindelende,
- Fig. 2: eine Arbeitsspindel zur Verwendung als feste und als rotierende Werkzeugaufnahme mit Spannkrafteinleitung über eine Spindeldurchdringung und
- Fig. 3: eine Arbeitsspindel als Motorspindel mit Werkstückspanneinrichtung.

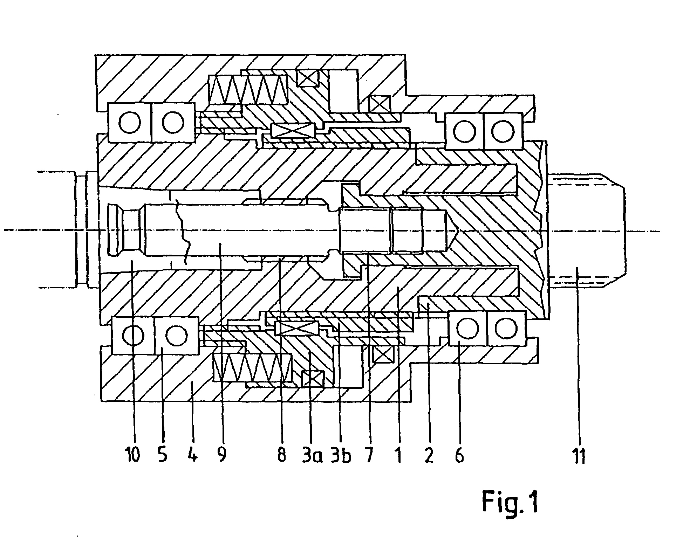

In Fig. 1 ist eine Arbeitsspindel dargestellt, deren zentrale zweiteilige Spindelwelle aus zwei Spindelwellenteilen 1,2 koaxial von einem zwischen zwei Endstellungen axial verschieblichen Ring 3a,3b umfaßt wird. Dabei verbindet der Ring 3a,3b in einer seiner axialen Endstellungen die beiden Spindelwellenteile 1,2 zu einer als Einheit wirksamen Spindelwelle zur Nutzung der Einrichtung als Werkzeugspindel. In seiner anderen axialen Endstellung verbindet der koaxiale Ring 3 den Spindelwellenteil 1 mit der Werkzeugoufnahme fest mit dem nicht rotierenden Spindelgehäuse 4, wobei in dieser Stellung mit dem geregelten Spindelantrieb 11 Werkzeuge gespannt oder gelöst werden können oder die ganze Einheit als feste Werkzeugaufnahme genutzt werden kann. Die Spannbewegung wird hier am Spindelende auf ein durch die gesamte Spindelwelle geführtes, zweiteiliges Betätigungselement 9 übertragen, welches innerhalb der Spindelwelle die rotatorische Spann- Lösebewegung in eine axiale Bewegung umwandelt. Der Spann- Lösemechanismus ist abhängig vom verwendeten Werkzeugsystem.

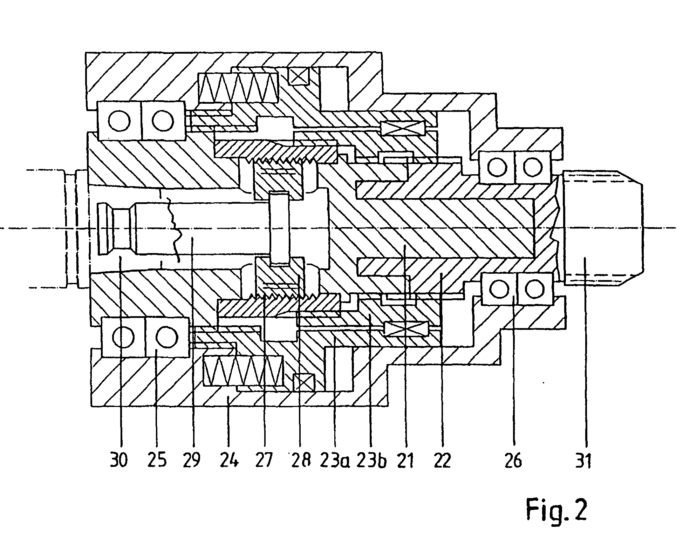

In Fig. 2 ist eine Variante zur Arbeitsspindel nach Fig.1 dargestellt. Die Spann- Lösebewegung wird hier über eine Spindeldurchdringung im Spindelwellenteil 21 zur Werkzeugaufnahme geführt. Die relative Verdrehung vom Spindelwellenteil 22 wird auf eine koaxial angeordnete, axial unverschiebliche Spannmutter 27 am Spindelwellenteil 21 übertragen, die ihrerseits mit axial verschieblichen Segmenren 28 in Längsnuten am Spindelwellenteil 21 so verbunden ist, daß ihre relative Verdrehung zu einer Axialbewegung der Spannsegmente 28 und des mit diesen gekoppelten Betätigungselements 29 führt.

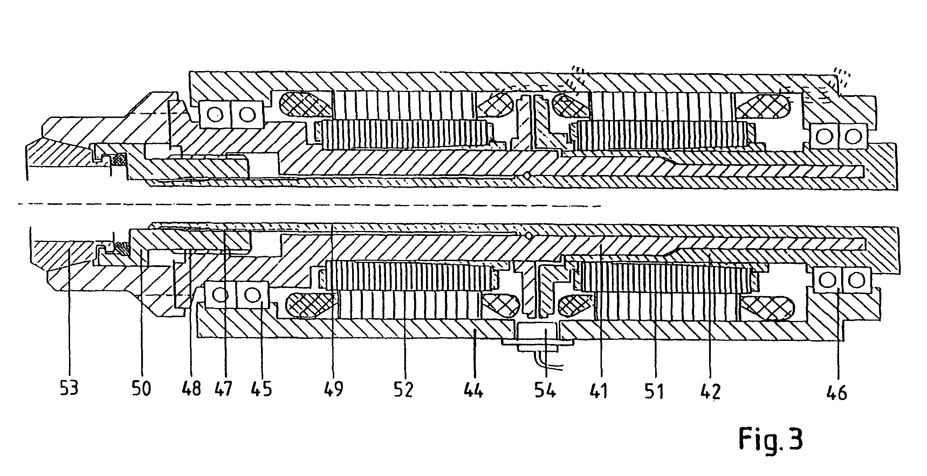

In Fig. 3 wird eine Arbeitsspindel mit Werkstückspanneinrichtung gezeigt, die als Doppel- Motorspindel ausgeführt ist. Die beiden Spindelwellenteile 41,42 sind mit eigenständigen Spindelantrieben 51,52 verbunden. Ein Positionsgeber 54 erfaßt permanent die jeweiligen Drehwinkelpositionen beider Spindelwellenteile 51,52, was über eine geeignete Ansteuerung mit Achseninterpolation dann gezielte Spann- Lösevorgänge bei jeder gewünschten Drehzahl für die Werkstückaufnahme möglich macht, indem das Spindelwellenteil 52 mit einer geregelten, abweichenden Drehung in Bezug zur Drehung des Spindelwellenteils 51 gefahren wird. Der Positionsgeber 54 überwacht außerhalb von Spann- Lösevorgängen auch die Beibehaltung von einem bestimmten, gewünschten Spann- Lösestatus.

Die Spann- Lösebewegung wird hier am Spindelende als Drehbewegung auf ein als Rohr ausgebildetes und durch die gesamte Spindelwelle 51,52 geführtes Betätigungselement 49 übertragen. Über eine Gewindeverbindung mit dem unverdrehbaren, α-ber axial verschieblichen Spann- Löse- Mechanismus 50 wird die Drehbewegung in eine Axialbewegung umgewandelt. Da die Spann- Lösebewegung als eine geregelte Achse funktioniert, kann diese funktionell aufgeteilt wirksam werden, indem z.b. der Spann- Lösemechanismus 50 in ganz vorgefahrener Stellung den kompletten Spannsatz 53 zum Wechseln freigibt, und im übrigen Bereich der gleichen Bewegung der Spannsatz 53 zur Werkstückspannung betätigt wird.

Das rohrförmige Betätigungselement 49 ermöglicht eine Verwendung dieser Arbeitsspindel zur Bearbeitung von Stangenmaterial.

## Patentansprüche

1. Eine Maschinenspindel zur Werkzeug- oder Werkstückaufnahme mit zweigeteilter, zentraler Spindelwelle, die mit ihren beiden gegeneinander verdrehbaren, aber axial zueinander unverschieblichen Spindelwellenteilen (1,2,21,22,41,42) als eine Einheit an beiden Spindelenden in einem rotationsfesten Spindelgehäuse (4,24,44) gelagert ist, wobei die beiden Spindelwellenteile (1,2,21,22,41,42) der Spindelwelle koaxial angeordnet sind, die Spindelwelle als Einheit gelagert ist und durch eine relative Verdrehung der ersten Spindelwellenteils (1, 21,41) mit einer Werkzeugoder Werkstückaufnahme gegen das zweite Spindelwellenteil (2,22,42) ein integrierter, aufgabenabhängïger Spann- Lösemechanismus (10,30,50) betätigbar ist, der Maschinenspindel wenigstens ein winkellagegeregelter Spindelantrieb (11,31,51) zugeordnet ist und das zweite Spindelwellenteil (2,22, 42) mit dem Spindelantrieb (11,31,51) verbunden ist, und wobei das erste Spindelwellenteil (1,21,41) mit der Werkzeug- oder Werkstückaufnahme in zwei Lagerstellen im rotationsfesten Spindelgehäuse (4,24,44) gelagert ist und das zweite Spindelwellenteil (2,22,42) seinerseits indirekt und koaxial angeordnet auf oder im ersten Spindelwellenteil (1, 21,41) gelagert ist, **dadurch gekennzeichnet, daß** die Einheit der Spindelwelle dadurch als Ganzes stabil gelagert ist, indem das erste Spindelwellenteil (1,21,41) auf der Seite der Werkzeug- oder Werkstückaufnahme in einer ersten Lagerstelle (5,25,45) direkt im Spindelgehäuse (4,24,44) gelagert ist und mit dem entgegengesetzten Teilwellenende indirekt im zweiten Spindelwellenteil (2,22,42), wobei das zweite Spindelwellenteil (2,22,42) seinerseits nur mit einer zweiten Lagerstelle (6,26,46) direkt im Spindelgehäuse (4,24,44) gelagert ist und durch das gelagerte Spindelwellenteil (1,21,41) gestützt wird, indem dieses innerhalb von Spindelwellenteil (2,22,42) bis in die zweite Lagerstelle (6,26,46) hineinreicht oder sehr nahe an diese heran.

2. Maschinenspindel nach einem der vorgenannten Ansprüche, **dadurch gekennzeichnet, daß** die zweiteilige Spindelwelle koaxial von einem zwischen zwei Endstellungen axial verschieblichen Ring (3a,3b,23a, 23b) umfaßt wird, der in einer axialen Endstellung die beiden Spindelwellenteile (1,2,21,22) zu einer als Einheit wirksamen Spindelwelle für den normalen Betrieb als Maschinenspindel und in seiner anderen axialen Endstellung den Spindelwellenteil (1,21) mit der Werkzeugoder Werkstückaufnahme fest mit dem nicht rotierenden Spindelgehäuse (4,24) verbindet, wobei der nicht festgesetzte zweite Spindelwellenteil (2,22) ausschließlich mit dem je nach Aufgabenstellung verwendeten Spann- Lösemechanismus (10,30) gekoppelt ist, mit dem über einen mit diesem zweiten Spindelwellenteil (2,22) verbundenen geregelten Spindelantrieb (11,31) der Spannmechanismus (10,30) betätigbar ist.

3. Maschinenspindel nach einem der vorgenannten Ansprüche, **dadurch gekennzeichnet, daß** der erste Spindelwellenteil (41) mit einem eigenen winkellagegeregelten Spindelantrieb (52) verbunden ist, mit dem der Spindelwellenteil (41) separat antreibbar ist, wobei die separaten Ansteuerungen für die beiden Spindelwellenteile (41,42) über eine Achseninterpolation gekoppelt sind.

4. Maschinenspindel nach einem der vorgenannten Ansprüche, **dadurch gekennzeichnet, daß** die beiden Spindelwellenteile (1,2,21,22,41,42) axial ortsfest gegeneinander verdrehbar angeordnet sind und Reaktionskräfte beim Spann- Lösevorgang durch die axiale Verbindung aufgenommen werden.

5. Maschinenspindel nach einem der vorgenannten Ansprüche, **dadurch gekennzeichnet, daß** durch die gesamte Spindelwelle ein Betätigungselement (9,29,49) für den Spann- Lösemechanismus (10,30,50) geführt ist, auf das die Spann- Lösebewegung am Spindelwellenende übertragen wird, wobei das Betätigungselement (9,29) mit dem topf-förmigen zweiten Spindelwellentei) (2,22) verbunden ist oder das Betätigungselement (49) mit dem zweiten Spindelwellenteil (42) einteilig ausgebildet ist.

6. Maschinenspindel nach einem der vorgenannten Ansprüche, **dadurch gekennzeichnet, daß** die Spann- Lösebewegung über eine Spindeldurchdringung im Spindelwellenteil (1,21,41) auf ein im Spindelwelleninneren geführtes Betätigungselement (9,29,49) übertragen wird, indem ein Spindelwellenteil (2,42) entweder selbst als Spannmutter (7,47) wirkt und ausgebildet ist, oder eine separate Spannmutter (27), die ebenfalls koaxial und axial unverschieblich auf dem ersten Spindelwellenteil (21) angeordnet ist, die relative Verdrehung des zweiten Spindelwellenteils (22) aufnimmt, wobei das teilweise als Spannmutter (27) ausgebildete Spindelwellenteil (2,42) oder die separate Spannmutter (27) mit axial verschieblichen Segmenten (8,28,48) in Längsnuten am Spindelwellenteil (1,21,41) so verbunden ist, daß ihre relative Verdrehung zu einer Axialbewegung der Spannsegmente (8,28,48) und des mit diesen gekoppelten Betätigungselements (9,29,49) führt.

7. Maschinenspindel nach einem der vorgenannten Ansprüche, **dadurch gekennzeichnet, daß** der gesamte Spann- Löseweg funktionell in Teilstrecken aufgeteilt ist, in eine erste Teilstrecke, auf der spezifische Spannelemente wie Spanneinsätze (53) und Greifer als Ganzes lös- oder fixierbar sind und in eine restliche Teilstrecke, auf der diese spezifischen Spannelemente betätigbar sind.

8. Maschinenspindel nach einem der Ansprüche 1-2 und 4-7, **dadurch gekennzeichnet, daß** der koaxial angeordnete und axial verschiebliche Ring (3a,3b,23a,23b) in einer seiner axialen Endstellungen die beiden Spindelwellenteile (1,2,21,22) formschlüssig verbindet, was deren Verdrehlageposition zueinander und den daraus resultierenden Spann- Lösestatus sichert.

9. Maschinenspindel nach Anspruch 8, **dadurch gekennzeichnet, daß** der koaxial angeordnete und axial verschiebliche Ring (3a,3b, 23a,23b) eine Innenverzahnung aufweist, die in der einen axialen Endstellung mit einer passenden Außenverzahnung auf beiden Spindelwellenteilen (1,2,21,22) gleichzeitig im Eingriff ist und in der anderen axialen Endstellung nur mit einer Außenverzahnung eines Spindelwellenteils (1,21) im Eingriff ist.

10. Maschinenspindel nach einem der Ansprüche 1-2 und 4-9, **dadurch gekennzeichnet, daß** der koaxial angeordnete Ring (3a,3b, 23a,23b) in sich radial koaxial zweigeteilt ist, wobei das äußere Ringteil (3a,23a) axial verschieblich aber unverdrehbar zum Spindelgehäuse (4,24) ausgebildet ist, und das innere Ringteil (3b,23b) verdrehbar aber axial unverschieblich mit dem äußeren Ringteil (3a,23a) verbunden ist.

11. Maschinenspindel nach Anspruch 10 **dadurch gekennzeichnet, daß** der äußere, nicht drehbare Ringteil (3a,23a) als Ringkolben ausgebildet ist und mit dem Spindelgehäuse (4,24) eine Druckkammer bildet, die mit einem Druckmedium beaufschlagbar ist.

12. Maschinenspindel nach einem der Ansprüche 10 oder 11, **dadurch gekennzeichnet, daß** der äußere, nicht drehbare Ringteil (3a,23a) die spielfreie Verbindung zwischen dem nicht rotierenden Spindelgehäuse (4,24) und dem ersten Spindelwellenteil (1,21) mit der Werkzeug- oder Werkstückaufnahme in einer axialen Endstellung herstellt.

13. Maschinenspindel nach einem der vorgenannten Ansprüche, **dadurch gekennzeichnet, daß** im Spindelgehäuse (4,41,44) mindestens ein Positionsgeber (54) angeordnet ist, der die jeweiligen Drehwinkelpositionen beider Spindelwellenteile (1,2,21,22,41,42) erfaßt.

14. Maschinenspindel nach Anspruch 3 und 13, **dadurch gekennzeichnet, daß** ein Positionsgeber (54) permanent die jeweiligen Drehwinkelpositionen beider Spindelwellenteile (41,42) erfaßt, die Beibehaltung eines vorherbestimmten Spann-Lösestatus von einem Prozeßrechner überwacht ist und daß bei hohen eingebrachten Spann- Lösemomenten der Spindelantrieb (51) am Spindelwellenteil (42) den Spindelantrieb (52) am Spindelwellenteil (41) mit ausreichendem Abstand zum Spann- Lösemoment als Parallelantrieb unterstützt.

15. Maschinenspindel nach einem der vorgenannten Ansprüche, **dadurch gekennzeichnet, daß** der Spann- Lösemechanismus (10,30,50) selbsthemmend ausgebildet ist.

## Claims

1. Machine spindle for tool or workpiece mounting, having a central spindle shaft which is split in two and which, with its two spindle-shaft parts (1, 2, 21, 22, 41, 42) rotatable relative to one another but axially non-displaceable relative to one another, is mounted as a unit at both spindle ends in a rotationally fixed spindle housing (4, 24, 44), the two spindle-shaft parts (1, 2, 21, 22, 41, 42) of the spindle shaft being arranged coaxially, the spindle shaft being mounted as a unit, and an integrated, task-related clamping/releasing mechanism (10, 30, 50) being actuable by a relative rotation of the first spindle-shaft part (1, 21, 41) with a tool holder or workpiece holder with respect to the second spindle-shaft part (2, 22, 42), at least one spindle drive (11, 31, 51) controlled for angular position being assigned to the machine spindle, and the second spindle-shaft part (2, 22, 42) being connected to the spindle drive (11, 31, 51), and the first spindle-shaft part (1, 21, 41) having the tool holder or workpiece holder being mounted at two bearing points in the rotationally fixed spindle housing (4, 24, 44), and the second spindle-shaft part (2, 22, 42) in turn being arranged indirectly and coaxially on or in the first spindle-shaft part (1, 21, 41), **characterized in that** the unit of the spindle shaft is mounted as an entity in a robust manner by the first spindle-shaft part (1, 21, 41) on the side of the tool holder or workpiece holder being mounted at a first bearing point (5, 25, 45) directly in the spindle housing (4, 24, 44) and with the opposite sectional shaft end indirectly in the second spindle-shaft part (2, 22, 42), the second spindle-shaft part (2, 22, 42) in turn being mounted only with a second bearing point (6, 26, 46) directly in the spindle housing (4, 24, 44) and being supported by the mounted spindle-shaft part (1, 21, 41) by the latter extending inside the spindle-shaft part (2, 22, 42) right into the second bearing point (6, 26, 46) or very close up to the latter.

2. Machine spindle according to Claim 1, **characterized in that** the spindle shaft split in two is enclosed coaxially by a ring (3a, 3b, 23a, 23b) which is axially displaceable between two end positions and which, in one axial end position, connects the two spindle-shaft parts (1, 2, 21, 22) to form a spindle shaft effective as a unit for the normal operation as machine spindle and, in its other axial end position, connects the spindle-shaft part (1, 21) having the tool holder or workpiece holder firmly to the non-rotating spindle housing (4, 24), the second spindle-shaft part (2, 22) which is not fixed being coupled solely to the clamping/releasing mechanism (10, 30), which is used in accordance with the task definition and with which the clamping mechanism (10, 30) can be actuated via a controlled spindle drive (11, 31) connected to this second spindle-shaft part (2, 22).

3. Machine spindle according to either of the aforesaid claims, **characterized in that** the first spindle-shaft part (41) is connected to a separate spindle drive (52) which is controlled for angular position and with which the spindle-shaft part (41) can be separately driven, the separate activations for the two spindle-shaft parts (41, 42) being coupled via axis interpolation.

4. Machine spindle according to one of the aforesaid claims, **characterized in that** the two spindle-shaft parts (1, 2, 21, 22, 41, 42) are arranged so as to be axially fixed and rotatable relative to one another, and reaction forces during the clamping/releasing operation are absorbed by the axial connection.

5. Machine spindle according to one of the aforesaid claims, **characterized in that** an actuating element (9, 29, 49) for the clamping/releasing mechanism (10, 30, 50) is passed through the entire spindle shaft, to which actuating element (9, 29, 49) the clamping/releasing movement is transmitted at the spindle-shaft end, the actuating element (9, 29) being connected to the pot-shaped second spindle-shaft end (2, 22), or the actuating element (49) being designed in one piece with the second spindle-shaft part (42).

6. Machine spindle according to one of the aforesaid claims, **characterized in that** the clamping/releasing movement is transmitted via a spindle penetration in the spindle-shaft part (1, 21, 41) to an actuating element (9, 29, 49), guided in the spindle-shaft interior, by a spindle-shaft part (2, 42) either acting and being designed itself as clamping nut (7, 47) or by a separate clamping nut (27), which is likewise arranged coaxially and in an axially non-displaceable manner on the first spindle-shaft part (21), taking up the relative rotation of the second spindle-shaft part (22), the spindle-shaft part (2, 42) partly designed as clamping nut (27) or the separate clamping nut (27) being connected to axially displaceable segments (8, 28, 48) in longitudinal grooves on the spindle-shaft part (1, 21, 41) in such a way that their relative rotation leads to an axial movement of the clamping segments (8, 28, 48) and of the actuating element (9, 29, 49) coupled to the latter.

7. Machine spindle according to one of the aforesaid claims, **characterized in that** the entire clamping/releasing path is functionally split up into sections, into a first section in which specific clamping elements such as clamping inserts (53) and grippers can be released or fixed as an entity and into a remaininig section in which these specific clamping elements can be actuated.

8. Machine spindle according to one of Claims 1 to 2 and 4 to 7, **characterized in that** the coaxially arranged and axially displaceable ring (3a, 3b, 23a, 23b), in one of its axial end positions, connects the two spindle-shaft parts (1, 2, 21, 22) in a positive-locking manner, which secures their rotary position relative to one another and the resulting clamping/releasing status.

9. Machine spindle according to Claim 8, **characterized in that** the coaxially arranged and axially displaceable ring (3a, 3b, 23a, 23b) has an internal tooth system which, in the one axial end position, is simultaneously in engagement with a mating external tooth system on both spindle-shaft parts (1, 2, 21, 22) and, in the other axial end position, is only in engagement with an external tooth system of one spindle-shaft part (1, 21).

10. Machine spindle according to one of Claims 1 to 2 and 4 to 9, **characterized in that** the coaxially arranged ring (3a, 3b, 23a, 23b) is radially split in two coaxially, the outer ring part (3a, 23a) being designed to be axially displaceable but non-rotatable relative to the spindle housing (4, 24), and the inner ring part (3b, 23b) being connected in a rotatable but axially non-displaceable manner to the outer ring part (3a, 23a).

11. Machine spindle according to Claim 10, **characterized in that** the outer, non-rotatable ring part (3a, 23a) is designed as an annular piston and forms with the spindle housing (4, 24) a pressure chamber, to which a pressure medium can be admitted.

12. Machine spindle according to either of Claims 10 and 11, **characterized in that** the outer, non-rotatable ring part (3a, 23a) produces the connection free of play between the non-rotating spindle housing (4, 24) and the first spindle-shaft part (1, 21) with the tool holder or workpiece holder in one axial end position.

13. Machine spindle according to one of the aforesaid claims, **characterized in that** at least one position transmitter (54) which detects the respective rotary-angle positions of both spindle-shaft parts (1, 2, 21, 22, 41, 42) is arranged in the spindle housing (4, 41, 44).

14. Machine spindle according to Claims 3 and 13, **characterized in that** a position transmitter (54) permanently detects the respective rotary-angle positions of both spindle-shaft parts (41, 42), and the retention of a predetermined clamping/releasing status is monitored by a process computer, and **in that**, if high clamping/releasing moments are introduced, the spindle drive (51) at the spindle-shaft part (42) assists the spindle drive (52) at the spindle-shaft part (41) as a parallel drive with sufficient distance from the clamping/releasing moment.

15. Machine spindle according to one of the aforesaid claims, **characterized in that** the clamping/releasing mechanism (10, 30, 50) is designed to be self-locking.

## Revendications

1. Broche de machine pour recevoir un outil ou une pièce à usiner, comprenant un arbre de broche central en deux parties, qui est monté avec ses deux parties d'arbre de broche (1, 2, 21, 22, 41, 42) rotatives l'une par rapport à l'autre, mais fixes axialement l'une par rapport à l'autre, sous forme d'une unité aux deux extrémités de la broche dans un boîtier de broche fixe en rotation (4, 24, 44), les deux parties d'arbre de broche (1, 2, 21, 22, 41, 42) de l'arbre de broche étant disposées coaxialement, l'arbre de broche étant monté en tant qu'unité et un mécanisme de serrage-desserrage (10, 30, 50) intégré, dépendant de la tâche, pouvant être actionné par une rotation relative de la première partie d'arbre de broche (1, 21, 41) avec un logement d'outil ou de pièce à usiner par rapport à la deuxième partie d'arbre de broche (2, 22, 42), au moins une commande de broche (11, 31, 51) régulée en position angulaire étant associée à la broche de machine, et la deuxième partie d'arbre de broche (2, 22, 42) étant connectée à la commande de broche (11, 31, 51), et la première partie d'arbre de broche (1, 21, 41) avec le logement d'outil ou de pièce à usiner étant montée dans deux positions de support dans le boîtier de la broche fixe en rotation (4, 24, 44), et la deuxième partie d'arbre de broche (2, 22, 42) pour sa part étant montée dans une position indirecte et coaxiale sur ou dans la première partie d'arbre de broche (1, 21, 41), **caractérisée en ce que** l'unité de l'arbre de broche est de ce fait montée de manière stable en tant que pièce unitaire, en montant la première partie d'arbre de broche (1, 21, 41) du côté du logement d'outil ou de pièce à usiner dans une première position de support (5, 25, 45) directement dans le boîtier de la broche (4, 24, 44) et avec l'extrémité de l'arbre partiel opposée, indirectement dans la deuxième partie d'arbre de broche (2, 22, 42), la deuxième partie d'arbre de broche (2, 22, 42) pour sa part étant montée seulement avec une deuxième position de support (6, 26, 46) directement dans le boîtier de la broche (4, 24, 44) et étant supportée par la partie d'arbre de broche montée (1, 21, 41), celle-ci pénétrant à l'intérieur de la partie d'arbre de broche (2, 22, 42) jusque dans la deuxième position de support (6, 26, 46) ou s'approchant très près de celle-ci.

2. Broche de machine selon la revendication précédente, **caractérisée en ce que** l'arbre de broche en deux parties est entouré coaxialement par une bague (3a, 3b, 23a, 23b) déplaçable axialement entre deux positions d'extrémité, laquelle relie, dans une position d'extrémité axiale, les deux parties d'arbre de broche (1, 2, 21, 22) à un arbre de broche utilisé en tant qu'unité pour le fonctionnement normal en tant que broche de machine, et dans son autre position d'extrémité axiale, relie la partie d'arbre de broche (1, 21) avec le logement d'outil ou de pièce à usiner fixement au boîtier de broche non rotatif (4, 24), la deuxième partie d'arbre de broche (2, 22) non fixe étant exclusivement accouplée au mécanisme de serrage-desserrage (10, 30) utilisé en fonction des exigences, et permettant d'actionner le mécanisme de serrage (10, 30) par le biais d'une commande de broche (11, 31) régulée, connectée à cette deuxième partie d'arbre de broche (2, 22).

3. Broche de machine selon l'une quelconque des revendications précédentes, **caractérisée en ce que** la première partie d'arbre de broche (41) est connectée à une commande de broche (52) propre régulée en position angulaire, avec laquelle la partie d'arbre de broche (41) peut être entraînée séparément, les commandes séparées pour les deux parties d'arbre de broche (41, 42) étant accouplées par le biais d'une interpolation d'axes.

4. Broche de machine selon l'une quelconque des revendications précédentes, **caractérisée en ce que** les deux parties d'arbre de broche (1, 2, 21, 22, 41, 42) sont disposées rotatives l'une par rapport à l'autre de manière fixe axialement et les forces de réaction lors de l'opération de serrage-desserrage sont reçues par la connexion axiale.

5. Broche de machine selon l'une quelconque des revendications précédentes, **caractérisée en ce qu'**un élément d'actionnement (9, 29, 49) pour le mécanisme de serrage-desserrage (10, 30, 50), sur lequel le mouvement de serrage-desserrage est transmis à l'extrémité de l'arbre de broche, est guidé par l'ensemble de l'arbre de broche, l'élément d'actionnement (9, 29) étant connecté à la deuxième partie d'arbre de broche (2, 22) en forme de coupelle, ou l'élément d'actionnement (49) étant réalisé d'une pièce avec la deuxième partie d'arbre de broche (42).

6. Broche de machine selon l'une quelconque des revendications précédentes, **caractérisée en ce que** le mouvement de serrage-desserrage est transmis par le biais d'un perçage de la broche dans la partie d'arbre de broche (1, 21, 41) à un élément d'actionnement (9, 29, 49) guidé à l'intérieur de l'arbre de broche, soit une partie d'arbre de broche (2, 42) agissant et étant réalisée elle-même en tant qu'écrou de serrage (7, 47), soit un écrou de serrage séparé (27), qui est également disposé fixe axialement et coaxialement sur la première partie d'arbre de broche (21), recevant la rotation relative de la deuxième partie d'arbre de broche (22), la partie d'arbre de broche (2, 42) réalisée en tant qu'écrou de serrage (27) ou l'écrou de serrage séparé (27), étant connecté à des segments mobiles axialement (8, 28, 48) dans des rainures longitudinales sur la partie d'arbre de broche (1, 21, 41) de telle sorte que sa rotation relative conduise à un mouvement axial des segments de serrage (8, 28, 48) et de l'élément d'actionnement (9, 29, 49) accouplé à ceux-ci.

7. Broche de machine selon l'une quelconque des revendications précédentes, **caractérisée en ce que** la course de serrage-desserrage totale est divisée fonctionnellement en sections partielles, en une première section partielle, sur laquelle des éléments de serrage spécifiques tels que des inserts de serrage (53) et des dispositifs de préhension peuvent être desserrés ou fixés en tant qu'unité, et en une section partielle restante, sur laquelle ces éléments de serrage spécifiques peuvent être actionnés.

8. Broche de machine selon l'une quelconque des revendications 1 à 2 et 4 à 7, **caractérisée en ce que** la bague disposée coaxialement et déplaçable axialement (3a, 3b, 23a, 23b) relie par engagement positif dans une de ses positions d'extrémité axiales, les deux parties d'arbre de broche (1, 2, 21, 22), ce qui assure leur position rotative l'une par rapport à l'autre et l'état de serrage-desserrage en résultant.

9. Broche de machine selon la revendication 8, **caractérisée en ce que** la bague disposée coaxialement et déplaçable axialement (3a, 3b, 23a, 23b) présente une denture interne qui, dans une position d'extrémité axiale, vient en prise simultanément avec une denture externe adaptée sur les deux parties d'arbre de broche (1, 2, 21, 22) et, dans l'autre position d'extrémité axiale, uniquement avec une denture externe d'une partie d'arbre de broche (1, 21).

10. Broche de machine selon l'une quelconque des revendications 1 à 2 et 4 à 9, **caractérisée en ce que** la bague disposée coaxialement (3a, 3b, 23a, 23b) est en soi divisée en deux parties radialement et coaxialement, la partie de bague extérieure (3a, 23a) étant réalisée déplaçable axialement mais non rotative par rapport au boîtier de la broche (4, 24), et la partie de bague intérieure (3b, 23b) étant connectée à rotation mais immobile axialement à la partie de bague extérieure (3a, 23a).

11. Broche de machine selon la revendication 10, **caractérisée en ce que** la partie de bague extérieure non rotative (3a, 23a) est réalisée en tant que piston annulaire, et forme avec le boîtier de la broche (4, 24), une chambre de pression qui peut être sollicitée avec un fluide sous pression.

12. Broche de machine selon l'une quelconque des revendications 10 ou 11, **caractérisée en ce que** la partie de bague extérieure non rotative (3a, 23a) crée la connexion sans jeu entre le boîtier de broche non rotatif (4, 24) et la première partie d'arbre de broche (1, 21) avec le logement d'outil ou de pièce à usiner, dans une position d'extrémité axiale.

13. Broche de machine selon l'une quelconque des revendications précédentes, **caractérisée en ce qu'**au moins un capteur de position (54) est disposé dans le boîtier de la broche (4, 41, 44), lequel détecte les positions respectives d'angle de rotation des deux parties d'arbre de broche (1, 2, 21, 22, 41, 42).

14. Broche de machine selon les revendications 3 et 13, **caractérisée en ce qu'**un capteur de position (54) détecte en permanence les positions respectives d'angle de rotation des deux parties d'arbre de broche (41, 42), la conservation d'un état de serrage-desserrage prédéterminé est surveillée par un ordinateur industriel et **en ce que** pour des couples de serrage-desserrage introduits élevés, la commande de la broche (51) sur la partie d'arbre de broche (42) supporte la commande de la broche (52) sur la partie d'arbre de broche (41) avec un écart suffisant par rapport au couple de serrage-desserrage en tant que commande en parallèle.

15. Broche de machine selon l'une quelconque des revendications précédentes, **caractérisée en ce que** le mécanisme de serrage-desserrage (10, 30, 50) est réalisé de façon à être autobloquant.
